# EUROPEAN PATENT SPECIFICATION

(11) **EP 4 116 119 B1**
(45) Date of publication and mention of the grant of the patent: **30.04.2025**
(21) Application number: 22761345.2
(22) Date of filing: 06.05.2022
(51) Int. Cl.: B60H 1/00, B60L 58/24, B60H 1/14, B60H 1/32, B60L 58/26, B60K 1/00, B60K 11/02

(54) **VEHICLE THERMAL MANAGEMENT SYSTEM AND VEHICLE**
WÄRMEVERWALTUNGSSYSTEM FÜR EIN FAHRZEUG UND FAHRZEUG
SYSTÈME DE GESTION THERMIQUE DE VÉHICULE ET VÉHICULE

(30) Priority: 25.05.2021 CN 202110573390
(43) Date of publication of application: 11.01.2023
(73) Proprietor: Mind Electronics Appliance Co., Ltd., Baoding City, Hebei Province 071051 (CN)
(72) Inventor: BENOUALI, Jugurtha, Hebei 071051 (CN)
(74) Representative: Viering, Jentschura & Partner mbB Patent- und Rechtsanwälte
(86) International application number: PCT/CN2022/091254
(87) International publication number: WO 2022/247602

(56) References cited:
- EP-A1- 3 260 319
- WO-A1-2018/069629
- WO-A1-2019/062553
- CN-A- 107 946 693
- CN-A- 110 356 195
- CN-A- 112 158 053
- CN-A- 112 158 054
- CN-A- 113 291 143
- CN-U- 213 228 245
- FR-A1- 2 995 669
- US-A1- 2020 031 191
- US-A1- 2020 220 236
- US-A1- 2020 317 026

## Description

### CROSS-REFERENCE TO RELEVANT APPLICATIONS

The present application claims the priority of the Chinese patent application filed on May 25th, 2021 before the CNIPA, China National Intellectual Property Administration with the application number of 202110573390.1 and the title of "VEHICLE THERMAL MANAGEMENT SYSTEM AND VEHICLE".

### TECHNICAL FIELD

The present invention relates to the technical field of vehicle thermal management systems, and more particularly, to a vehicle thermal management system and a vehicle.

### BACKGROUND

In the vehicle thermal management system, it usually comprises an air-conditioning thermal management system, a motor thermal management system, and a battery thermal management system. Regarding the air-conditioning thermal management system, when the ambient temperature is low, the heating capacity of the air conditioning is poor, and it is usually hard to satisfy the heating demand of the cabin. Regarding the motor thermal management system, the motor generates heat when driving the vehicle. In order to ensure the normal operation of the motor, it is required to perform heat dissipation and cooling to the motor. Regarding the battery thermal management system, in order to ensure that the battery pack may operate within the appropriate temperature range, it is required to cool the battery pack having an excessively high temperature, and heat the battery pack having an excessively low temperature.

However, the air-conditioning thermal management system, the motor thermal management system, and the battery thermal management system operate independently in the related art. In an aspect, the configuration results in an unreasonable heat collection plan of the vehicle thermal management systems, which results in energy waste, and in another aspect, the configuration also results in increasing the quantities of the components of the vehicle thermal management systems such as pipes, valves, and joints, which causes the cost to increase.

US patent application US2020220236A1 discloses an air conditioning and battery cooling arrangement.

US patent application US2020031191A1 discloses a vehicle heat management system.

European patent application EP3260319A1 discloses a heat pump system for a vehicle.

### SUMMARY

According to the present invention, a vehicle thermal management system according to claim 1 is provided. Preferred embodiments are further defined in the dependent claims.

An object of the present invention is to provide a vehicle thermal management system and a vehicle, to, by providing the vehicle thermal management system and the vehicle using the vehicle thermal management system, overcome the problems in the related art.

In order to achieve the above object, the present invention provides a vehicle thermal management system, wherein the vehicle thermal management system comprises:
a first coolant loop, wherein a first water pump, a motor, and a radiator are provided in the first coolant loop;
a second coolant loop, wherein a second water pump, a battery, and a first heat exchanger are provided in the second coolant loop, and the first heat exchanger is further located in a refrigerant flow path of an air conditioning system of a vehicle; and
a first flow path and a second flow path, wherein one end of the first flow path is connected to a coolant outlet of the motor and the other end is connected to a coolant inlet of the first heat exchanger, and one end of the second flow path is connected to a coolant outlet of the first heat exchanger and the other end is connected to a coolant inlet of the first water pump, whereby, in a motor-waste-heat-recovery mode, the vehicle thermal management system is capable of heating a refrigerant in the refrigerant flow path by using heat of the motor;
wherein a first switching valve is provided between the coolant outlet of the motor and the coolant inlet of the first heat exchanger, a second switching valve is provided between the coolant outlet of the first heat exchanger and the coolant inlet of the first water pump, whereby, in the motor-waste-heat-recovery mode, the vehicle thermal management system is capable of providing a flow path of a coolant is: the first water pump → the motor → the first switching valve → the first heat exchanger → the second switching valve → the first water pump;
wherein the vehicle thermal management system further comprises a first three-way valve, a second three-way valve, a third flow path, and a fourth flow path;
both of the first three-way valve and the second three-way valve are provided in the second coolant loop and are located at a coolant inlet side and a coolant outlet side of the first heat exchanger, respectively, one remaining port of the first three-way valve is connected to the first coolant loop via the third flow path, and one remaining port of the second three-way valve is connected to the first coolant loop via the fourth flow path; and
a connection point of the fourth flow path and the first coolant loop and a connection point of the third flow path and the first coolant loop are located on a coolant inlet side and a coolant outlet side of the motor, respectively, whereby the vehicle thermal management system is capable of heating the battery by using heat of the motor, or cooling the battery by using the radiator.

Optionally, the first switching valve is provided in the first flow path; and
the second flow path is bypass connected to the second coolant loop via the second switching valve, and the second switching valve is a three-way valve, whereby the second switching valve is capable of realizing an on-off switch of the second flow path and an on-off switch of the second coolant loop.

Optionally, a third switching valve is provided in the first coolant loop, and the third switching valve is provided between the motor and the radiator, to realize the on-off switch of the first coolant loop.

Optionally, in the second coolant loop, a first branch and a second branch are connected in parallel between the battery and the second water pump;
the first branch is short-circuit connected between the battery and the second water pump; and
an electronic device is provided in the second branch, wherein the electronic device comprises at least one of a charger, a motor controller, and a DC-DC converter.

Optionally, a flow size of the second branch is less than a flow size of the first branch, whereby a flow rate of a coolant flowing through the second branch is capable of being less than a flow rate of a coolant flowing through the first branch.

Optionally, the vehicle thermal management system further comprises a third coolant loop, a third water pump, a heater, and an heater core are provided in the third coolant loop, the heater core is for heating a cabin of the vehicle by using the heater, and the third coolant loop is connected to the first coolant loop and the second coolant loop by flow paths, whereby the third coolant loop is capable of solely operating, or being connected to one of the first coolant loop and the second coolant loop to operate, or being connected to both of the first coolant loop and the second coolant loop to operate.

Optionally, a second heat exchanger is provided in the third coolant loop, and the second heat exchanger is further located in the refrigerant flow path of the air conditioning system.

Optionally, the second heat exchanger is configured as a condenser in the air conditioning system.

Optionally, the vehicle thermal management system further comprises a third three-way valve and a fourth three-way valve;
the third three-way valve is provided in the third flow path, and one remaining port of the third three-way valve is connected to the third coolant loop by a flow path;
the fourth three-way valve is provided in the third coolant loop, and one remaining port of the fourth three-way valve is connected to the fourth flow path by a flow path; and
a connection point of the fourth three-way valve and the third coolant loop and a connection point of the third three-way valve and the third coolant loop are located on a coolant inlet side and a coolant outlet side of the second heat exchanger, respectively.

Optionally, a fourth switching valve is provided in the third coolant loop, and the fourth switching valve is located between the heater core and the fourth three-way valve, to realize the on-off switch of the third coolant loop.

According to another aspect of the present invention, there is provided a vehicle, wherein the vehicle comprises the vehicle thermal management system stated above.

### BRIEF DESCRIPTION OF THE DRAWINGS

The drawings are intended to provide a further understanding of the present invention, and constitute part of the description. The drawings are intended to interpret the present invention together with the following particular embodiments, and do not function to limit the present invention. In the drawings:

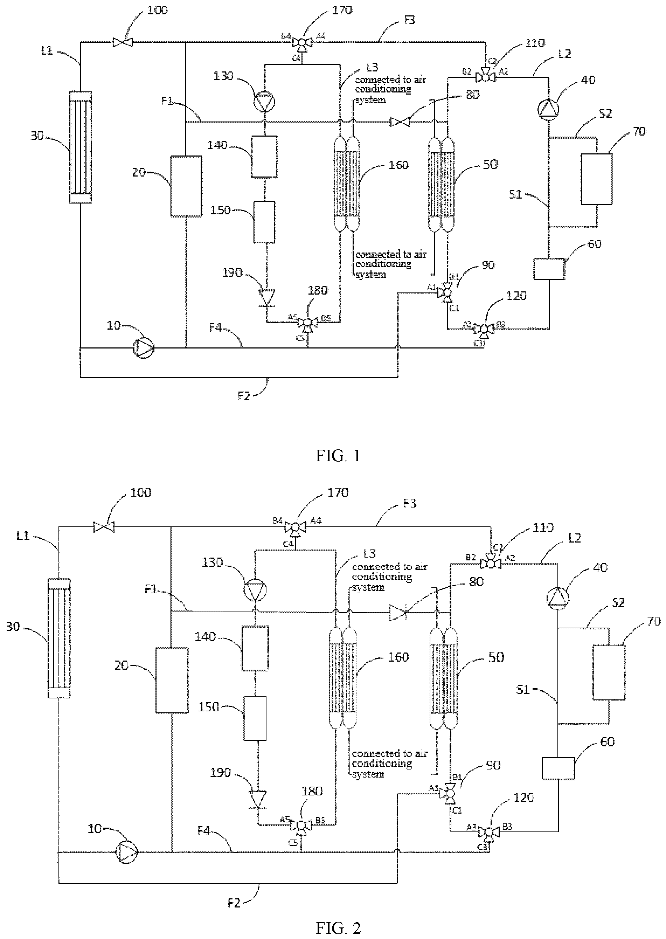

FIG. 1 is a schematic structural diagram of the vehicle thermal management system according to an embodiment of the present invention;
FIG. 2 is a schematic structural diagram of the vehicle thermal management system according to another embodiment of the present invention, wherein the solenoid valve in FIG. 1 is replaced by a one-way valve;

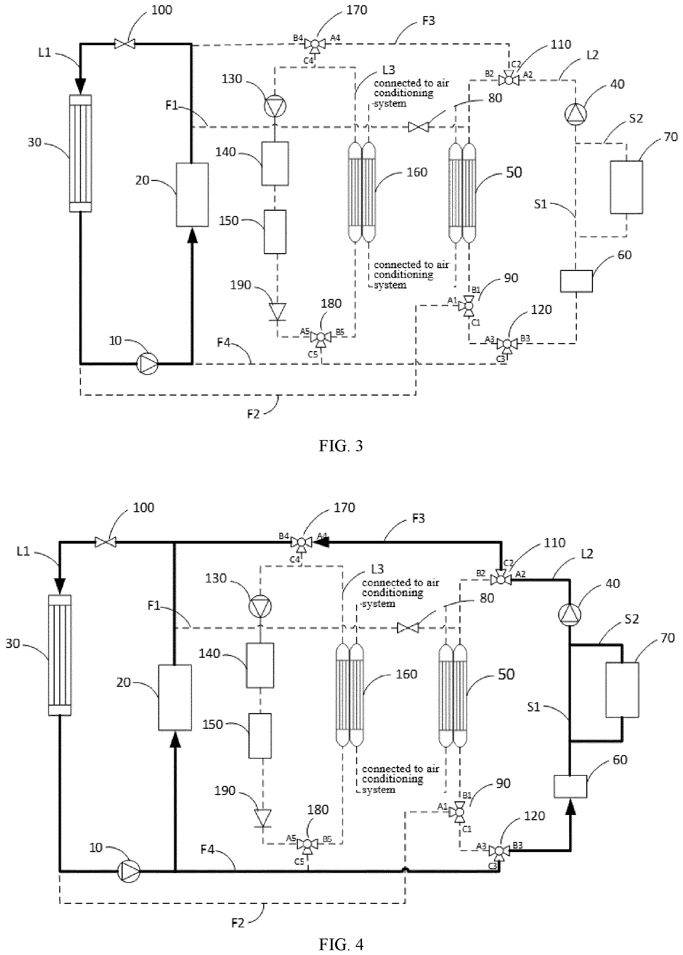

FIG. 3 is a schematic structural diagram of the vehicle thermal management system according to an embodiment of the present invention, wherein the vehicle thermal management system is in the first mode, and the heavy solid lines and the arrows in the figure represent the flowing paths and the flowing directions of the coolant in that mode;
FIG. 4 is a schematic structural diagram of the vehicle thermal management system according to an embodiment of the present invention, wherein the vehicle thermal management system is in the second mode, and the heavy solid lines and the arrows in the figure represent the flowing paths and the flowing directions of the coolant in that mode;

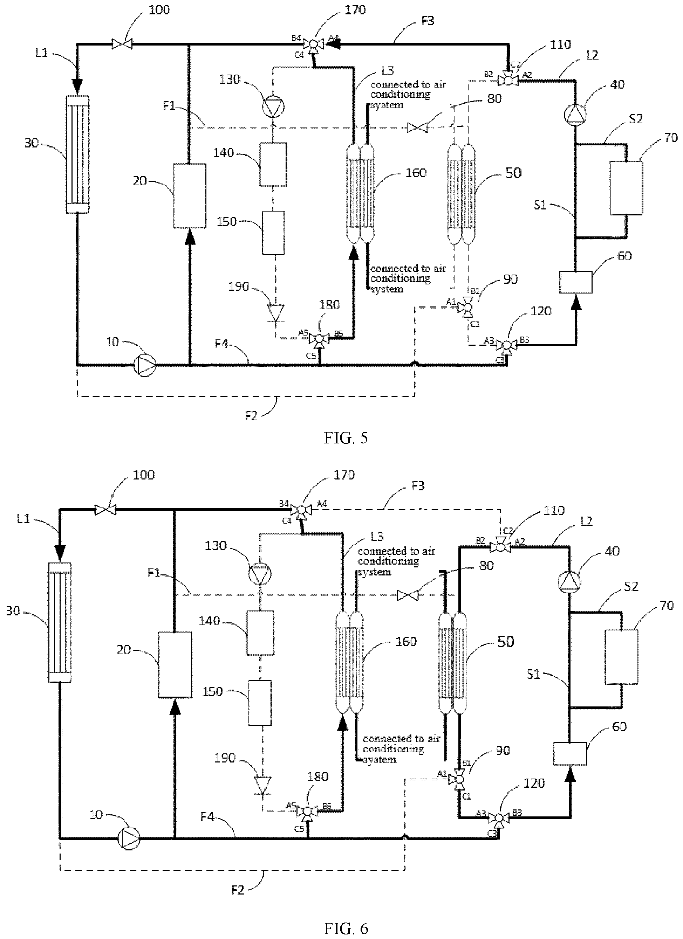

FIG. 5 is a schematic structural diagram of the vehicle thermal management system according to an embodiment of the present invention, wherein the vehicle thermal management system is in the third mode, and the heavy solid lines and the arrows in the figure represent the flowing paths and the flowing directions of the coolant in that mode;
FIG. 6 is a schematic structural diagram of the vehicle thermal management system according to an embodiment of the present invention, wherein the vehicle thermal management system is in the fourth mode, and the heavy solid lines and the arrows in the figure represent the flowing paths and the flowing directions of the coolant in that mode;

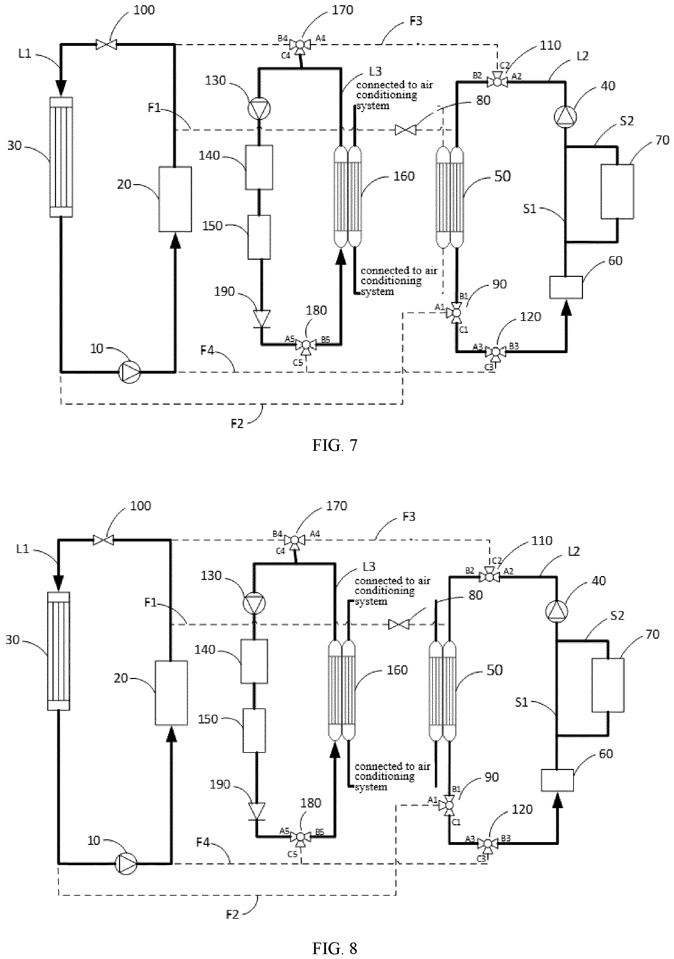

FIG. 7 is a schematic structural diagram of the vehicle thermal management system according to an embodiment of the present invention, wherein the vehicle thermal management system is in the fifth mode, and the heavy solid lines and the arrows in the figure represent the flowing paths and the flowing directions of the coolant in that mode;
FIG. 8 is a schematic structural diagram of the vehicle thermal management system according to an embodiment of the present invention, wherein the vehicle thermal management system is in the sixth mode, and the heavy solid lines and the arrows in the figure represent the flowing paths and the flowing directions of the coolant in that mode;

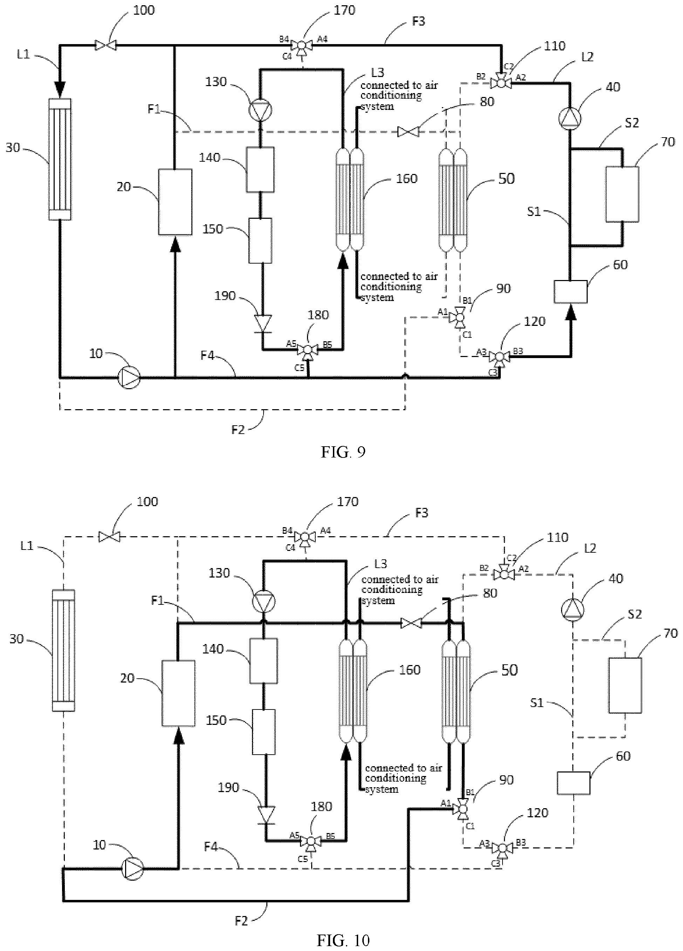

FIG. 9 is a schematic structural diagram of the vehicle thermal management system according to an embodiment of the present invention, wherein the vehicle thermal management system is in the seventh mode, and the heavy solid lines and the arrows in the figure represent the flowing paths and the flowing directions of the coolant in that mode;
FIG. 10 is a schematic structural diagram of the vehicle thermal management system according to an embodiment of the present invention, wherein the vehicle thermal management system is in the eighth mode, and the heavy solid lines and the arrows in the figure represent the flowing paths and the flowing directions of the coolant in that mode;

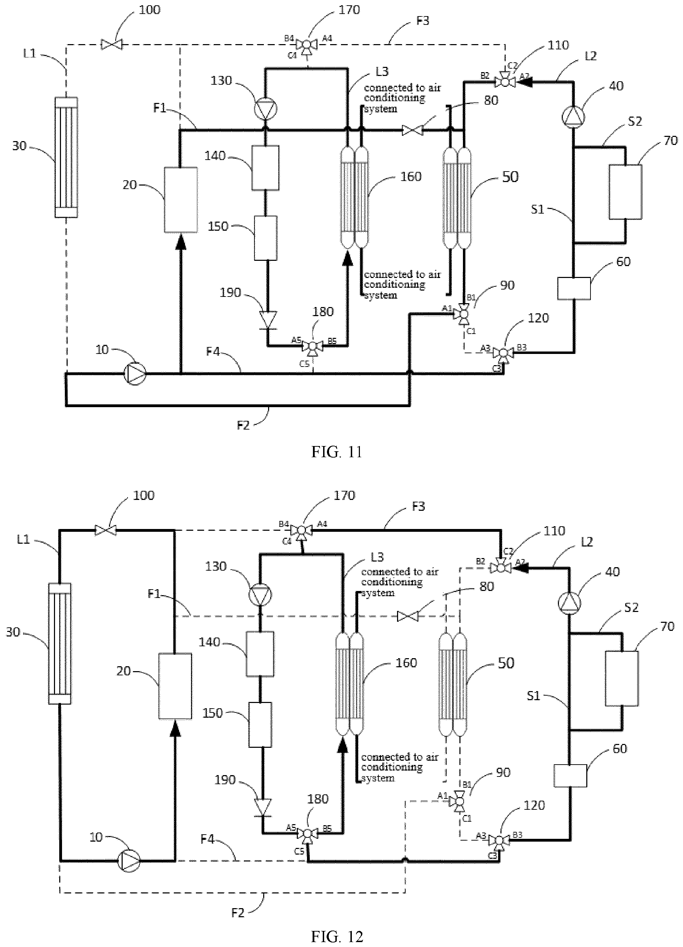

FIG. 11 is a schematic structural diagram of the vehicle thermal management system according to an embodiment of the present invention, wherein the vehicle thermal management system is in the ninth mode, and the heavy solid lines and the arrows in the figure represent the flowing paths and the flowing directions of the coolant in that mode;
FIG. 12 is a schematic structural diagram of the vehicle thermal management system according to an embodiment of the present invention, wherein the vehicle thermal management system is in the tenth mode, and the heavy solid lines and the arrows in the figure represent the flowing paths and the flowing directions of the coolant in that mode;

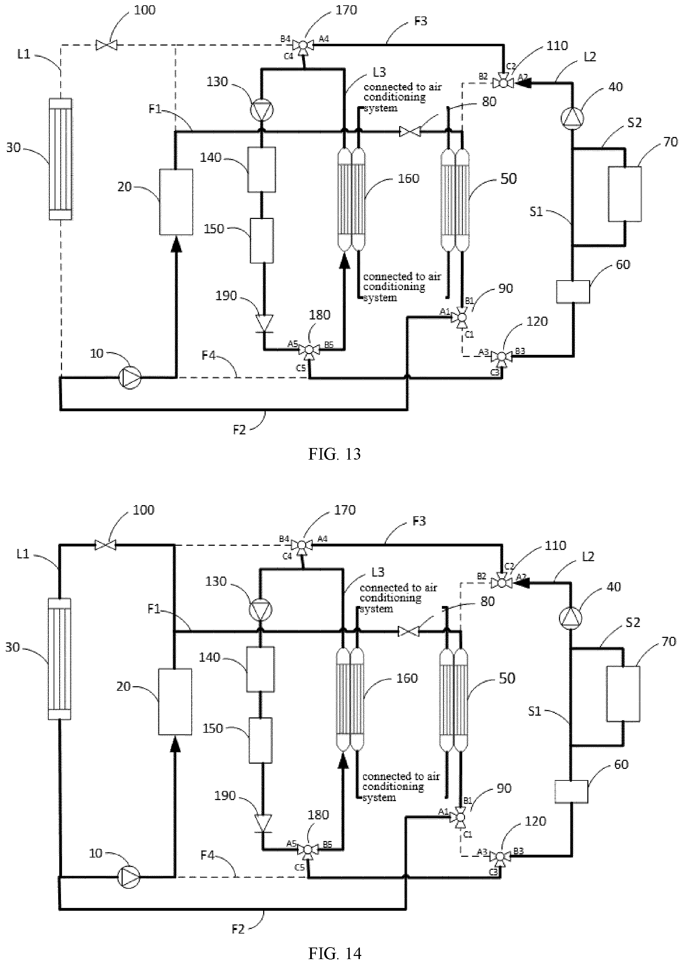

FIG. 13 is a schematic structural diagram of the vehicle thermal management system according to an embodiment of the present invention, wherein the vehicle thermal management system is in the eleventh mode, and the heavy solid lines and the arrows in the figure represent the flowing paths and the flowing directions of the coolant in that mode; and
FIG. 14 is a schematic structural diagram of the vehicle thermal management system according to an embodiment of the present invention, wherein the vehicle thermal management system is in the twelfth mode, and the heavy solid lines and the arrows in the figure represent the flowing paths and the flowing directions of the coolant in that mode.

### Description of the reference numbers

10-first water pump; 20-motor; 30-radiator; 40-second water pump; 50-first heat exchanger; 60-battery; 70-charger; 80-first switching valve; 90-second switching valve; 100-third switching valve; 110-first three-way valve; 120-second three-way valve; 130-third water pump; 140-heater; 150-heater core; 160-second heat exchanger; 170-third three-way valve; 180-fourth three-way valve; 190-fourth switching valve; L1-first coolant loop; L2-second coolant loop; L3-third coolant loop; F1-first flow path; F2-second flow path; F3-third flow path; F4-fourth flow path; S1-first branch; and S2-second branch.

### DETAILED DESCRIPTION OF THE EMBODIMENTS

The particular embodiments of the present invention will be described in detail below with reference to the drawings. It should be understood that the particular embodiments described herein are merely intended to describe and interpret the present invention, and are not intended to limit the present invention.

As shown in FIG. 1 to FIG. 14, the present invention provides a vehicle thermal management system. The vehicle thermal management system comprises a first coolant loop L1, a second coolant loop L2, a first flow path F1, and a second flow path F2. A first water pump 10, a motor 20, and a radiator 30 are provided in the first coolant loop L1. A second water pump 40, a battery 60, and a first heat exchanger 50 are provided in the second coolant loop L2, and the first heat exchanger 50 is further located in a refrigerant flow path of an air conditioning system of the vehicle; in other words, the first heat exchanger 50 is located in both of the first coolant loop L2 and the air conditioning system of the vehicle. One end of the first flow path F1 is connected to a coolant outlet of the motor 20 and the other end is connected to a coolant inlet of the first heat exchanger 50, and one end of the second flow path F2 is connected to a coolant outlet of the first heat exchanger 50 and the other end is connected to a coolant inlet of the first water pump 10, whereby a motor-waste-heat recovery mode is provided in the vehicle thermal management system, to provide heat to a refrigerant in the refrigerant flow path in the motor-waste-heat-recovery mode.

A first switching valve 80 is provided between the coolant outlet of the motor 20 and the coolant inlet of the first heat exchanger 50, and a second switching valve 90 is provided between the coolant outlet of the first heat exchanger 50 and the coolant inlet of the first water pump 10, and in the motor-waste-heat-recovery mode, as shown in FIG. 1 and FIG. 2, the flow path of the coolant is: the first water pump 10 → the motor 20 → the first switching valve 80 → the first heat exchanger 50 → the second switching valve 90 → the first water pump 10.

In the vehicle thermal management system according to the present invention, the motor 20 and the battery 60 are located in the two coolant loops, i.e., the first coolant loop L1 and the second coolant loop L2, and the two coolant loops may operate independently. For example, the radiator 30 is used to solely realize the heat dissipation of the motor 20, or the first heat exchanger 50 is used to exchange heat with the air conditioning system, to solely realize the heating to the battery 60. In addition, because the first flow path F1 and the second flow path F2 are provided to connect the first coolant loop L1 and the second coolant loop L2, the two coolant loops may be connected to operate, to realize the motor-waste-heat-recovery mode stated above. In other words, by communicating the two coolant loops, the waste heat of the motor 20 may be provided to the battery 60, to heat the battery 60. Moreover, by communicating the two coolant loops, by using the first heat exchanger 50, the heat exchange between the vehicle air conditioning system and the battery 60 and/or the motor 20 may be realized. Therefore, the configuration is conducive to reduce the quantities of the parts of the vehicle thermal management system and reduce the cost.

Particularly, the thermal management system provided by the present invention is capable of cooling or heating the battery 60 and/or the motor 20 by using the cold energy or heat of the air conditioning system through the first heat exchanger 50, to ensure that the battery 60 and/or the motor 20 may operate within the appropriate temperature ranges. Furthermore, the vehicle thermal management system may also realize the enthalpy increase of the refrigerant in the air conditioning system by using the heat of the motor 20 through the first heat exchanger 50, to increase the suction temperature and the suction pressure of the compressor, thereby improving the heating capacity of the air conditioning system in a low-temperature environment.

Furthermore, it may be known from the above that, in the motor-waste-heat-recovery mode, the coolant passes through a small number of parts in the flowing process, and is not required to pass through the parts that lead to a large heat loss, which is conducive to provide waste heat of the motor 20 to the first heat exchanger 50 as much as possible, so as to provide the heat to the battery 60 as much as possible.

Optionally, as shown in FIG. 1 and FIG. 2, the first switching valve 80 may be provided in the first flow path F1, the second flow path F2 is bypass connected to the second coolant loop L2 via the second switching valve 90, and the second switching valve 90 is a three-way valve, whereby the second switching valve 90 is capable of realizing an on-off switch of the second flow path F2 and an on-off switch of the second coolant loop L2. Particularly, as shown in FIG. 1, the second switching valve 90 communicates with the second flow path F2 via the port A1, and is connected to the second coolant loop L2 via the port B1 and the port C1.

In the present embodiment, because the first switching valve 80 is provided in the first flow path F1, the first switching valve 80 may be a common switching valve (for example, the solenoid valve shown in FIG. 1) or a one-way valve (as shown in FIG. 2).

The second switching valve 90 is a three-way valve, and it may not only control the on-off switch of the second flow path F2, but also may control the on-off switch of the second coolant loop L2. The second switching valve 90 controls the on-off switch of a plurality of the coolant flow paths, which is conducive to reduce the quantities of the parts, and reduce the cost. In addition, because the second switching valve 90 is a three-way valve, by controlling the on-off switch of the second switching valve 90, multiple different operation modes may be realized (which may be particularly seen below).

It may be understood that, in the other embodiments, the first switching valve 80 may be a three-way valve, and the first flow path F1 is bypass connected to the second coolant loop L2 via the first switching valve 80. The second switching valve 90 may be a common two-way valve and is located in the second flow path F2.

Optionally, as shown in FIG. 1 and FIG. 2, a third switching valve 100 may be provided in the first coolant loop L1, and the third switching valve 100 is provided between the motor 20 and the radiator 30, to realize the on-off switch of the first coolant loop L1. Accordingly, by switching on or switching off the third switching valve 100, different operation modes may be realized. For example, when the motor-waste-heat-recovery mode is required, the third switching valve may be used to cut off the first coolant loop L1, to prevent the radiator 30 located in the first coolant loop L1 from affecting the recovery of the waste heat of the motor.

Optionally, as shown in FIG. 1 and FIG. 2, in the second coolant loop L2, a first branch S1 and a second branch S2 may be connected in parallel between the battery 60 and the second water pump 40. The first branch S1 is short-circuit-connected between the battery 60 and the second water pump 40, and an electronic device is provided in the second branch S2, wherein the electronic device may comprise at least one of a charger 70, a motor controller, and a DC-DC converter.

In the present embodiment, by providing the two branches, in an aspect, when the battery 60 is required to be heated, part of the coolant may not pass through the electronic device, which is conducive to increase the efficiency of the heating to the battery 60. In another aspect, when it is required to cool the charger 70, the configuration also ensures that part of the coolant may flow through the charger 70 to cool it. Furthermore, such a configuration may not only ensure the cooling to the charger 70, but also avoid the provision of a switching valve in the first branch S1 and the second branch S2, which is conducive to reduce the use of the parts, which is conducive to simplify the structure of the system, and may reduce the cost.

Optionally, the flow size of the second branch S2 is less than the flow size of the first branch S1, whereby the flow rate of the coolant flowing through the second branch S2 is capable of being less than the flow rate of the coolant flowing through the first branch S1. A low amount of the coolant is required because the heat output of the electronic device is relatively small, Therefore, the second branch S2 may be used to deliver the coolant of a relatively small flow rate to the electronic device.

It may be understood that, in the other embodiments, switching valves may be provided in the first branch S1 and/or the second branch S2, to realize an active control on the on-off switch of the first branch S1 and/or the second branch S2.

As shown in FIG. 1 and FIG. 2, the vehicle thermal management system according to the invention, further comprises a first three-way valve 110, a second three-way valve 120, a third flow path F3 and a fourth flow path F4. Both of the first three-way valve 110 and the second three-way valve 120 are provided in the second coolant loop L2 and are located on a coolant inlet side and a coolant outlet side of the first heat exchanger 50, respectively. In other words, the first three-way valve 110 is connected to the second coolant loop L2 via the port A2 and the port B2, and the second three-way valve 120 is connected to the second coolant loop L2 via the port A3 and the port B3. One remaining port (the port C2) of the first three-way valve 110 is connected to the first coolant loop L1 via the third flow path F3, and one remaining port (the port C3) of the second three-way valve 120 is connected to the first coolant loop L1 via the fourth flow path F4.

As shown in FIG. 1 and FIG. 2, the connection point of the fourth flow path F4 and the first coolant loop L1 and the connection point of the third flow path F3 and the first coolant loop L1 are located on a coolant inlet side and a coolant outlet side of the motor 20, respectively, whereby the vehicle thermal management system is capable of heating the battery 60 by using heat of the motor 20, or cooling the battery 60 by using the radiator 30.

Optionally, as shown in FIG. 1 and FIG. 2, the vehicle thermal management system may further comprise a third coolant loop L3, a third water pump 130, a heater 140, and an heater core 150 are provided in the third coolant loop L3, the heater core 150 is for heating the cabin of the vehicle by using the heater 140, and the third coolant loop L3 is connected to the first coolant loop L1 and the second coolant loop L2 by flow paths, whereby the third coolant loop L3 is capable of solely operating, or being connected to one of the first coolant loop L1 and the second coolant loop L2 to operate, or being connected to both of the first coolant loop L1 and the second coolant loop L2 to operate. In other words, in the present embodiment, the three coolant loops may operate solely, and may also operate jointly, to realize multiple operation modes.

In addition, in an aspect, such a configuration is conducive to the heat exchange among the first coolant loop L1, the second coolant loop L2 and the coolant loop L3, for example, using the recovered waste heat of the motor 20 for the heating to the cabin. In another aspect, such a configuration is conducive to reduce the quantities of the parts of the vehicle thermal management system, which is conducive to reduce the cost.

The heater 140 may be any type of heater that may heat the coolant. For example, heater 140 may be a PTC heater (including an air-warming-type PTC heater and a water-warming-type PTC heater) or an HVCH heater (high-pressure coolant heater), and the particular type of the heater 10 is not limited in the present disclosure.

Optionally, as shown in FIG. 1 and FIG. 2, a second heat exchanger 160 may be provided in the third coolant loop L3, and the second heat exchanger 160 is further located in the refrigerant flow path of the air conditioning system. By providing the second heat exchanger 160, the heat exchange between the third coolant loop L3 and the air conditioning system may be performed. For example, the third coolant loop L3 absorbs the heat of the air conditioning system to be used to heat the cabin, the heat of the heater 140 may be transferred to the cabin by using the heater core 150, and the heat of the air conditioning system may be transferred to the cabin via the second heat exchanger 160 and by using the heater core 150, to heat the cabin. The heater 140 operates as an auxiliary heating source, and the air conditioning system operates as the primary heating source, to provide the heat to the heater core 150 via the second heat exchanger 160. Therefore, according to the cabin heating demand, the air conditioning system and the heater 140 may supply heat at the same time, and merely one of them may also be used to supply heat. For example, when the ambient temperature is low, when the air conditioning system is insufficient to satisfy the cabin heating, the heater 140 may be started up or both of them may be started up at the same time to ensure the heat of the cabin. Moreover, when the ambient temperature is not very low, starting up merely the air conditioning system may satisfy cabin heating. Alternatively, the second heat exchanger 160 may also absorb the heat of the air conditioning system to heat the battery, in which case the heater core may not be required to be started up.

As an alternative embodiment, the second heat exchanger 160 may be used as a condenser in the air conditioning system, to exchange heat with the air conditioning (heat pump) system, to increase the temperature of the coolant in the third coolant loop L3, to supply heat to the cabin.

Optionally, in another embodiment, the second heat exchanger 160 may be used as an evaporator to heat the refrigerant in the air conditioning system by using the temperature of the coolant in the third coolant loop L3.

Optionally, as shown in FIG. 1 and FIG. 2, the vehicle thermal management system may further comprise a third three-way valve 170 and a fourth three-way valve 180, the third three-way valve 170 is provided in the third flow path F3, or, in other words, the third three-way valve 170 is connected to the third flow path F3 via the port A4 and the port B4, and one remaining port (the port C4) of the third three-way valve 170 is connected to the third coolant loop L3 by a flow path. The fourth three-way valve 180 is provided in the third coolant loop L3, or, in other words, the fourth three-way valve 180 is connected to the fourth flow path F4 via the port A5 and the port B5, and one remaining port (the port C5) of the fourth three-way valve 180 is connected to the fourth flow path F4 by a flow path. The connection point of the fourth three-way valve 180 and the third coolant loop L3 and the connection point of the third three-way valve 170 and the third coolant loop L3 are located on a coolant inlet side and a coolant outlet side of the second heat exchanger 160, respectively.

By providing the third three-way valve and the fourth three-way valve, the third coolant loop L3 is connected to the first coolant loop L1 and the second coolant loop L2. Furthermore, by controlling the on-off switch of the third three-way valve 170 and the fourth three-way valve 180, different operation modes may be realized, which may be particularly seen below.

Optionally, as shown in FIG. 1 and FIG. 2, a fourth switching valve 190 is provided in the third coolant loop L3, and the fourth switching valve 190 is located between the heater core 150 and the fourth three-way valve 180, to realize the on-off switch of the third coolant loop L3. Therefore, according to demands, the fourth switching valve 190 may be switched on or switched off according to practical demands, to realize the corresponding operation modes. For example, when the second heat exchanger 160 operates as a condenser to perform heat dissipation to the air conditioning system, the third coolant loop L3 may be cut off by switching off the fourth switching valve 190, thereby preventing the heat of the second heat exchanger 160 from entering the heater core 150, which affects the temperature of the cabin. Optionally, the fourth switching valve 190 may be a one-way valve, and the one-way valve allows the coolant to flow from the heater core 150 to the second heat exchanger 160 and the fourth three-way valve 180.

The main operation modes and the circulation processes and the principles in the corresponding operation modes of the vehicle thermal management system will be described in detail below by taking the embodiment in FIG. 1 as an example with reference to FIG. 3 to FIG. 15.

The first mode is a mode in which the radiator 30 is used to cool the motor 20. In this mode, as shown in FIG. 3, the first water pump 10, the motor 20, and the radiator 30 form one circulation loop. In this case, the flow path of the coolant is: the first water pump 10 → the motor 20 → the third switching valve 100 → the radiator 30 → the first water pump 10. Accordingly, the coolant exchanges heat with the external environment by using the radiator 30, to reduce the temperature of the coolant, thereby cooling the motor 20.

The second mode is a mode in which the radiator 30 is used to cool the motor 20 and the battery 60 at the same time. As shown in FIG. 4, in this mode, the first water pump 10, the motor 20, and the radiator 30 form one circulation loop. The first water pump 10, the battery 60, the charger 70, the second water pump 40, and the radiator 30 form one circulation loop.

Particularly, in this case, there are two loops in the flow path of the coolant. In the first loop, the flow path of the coolant is: the first water pump 10 → the motor 20 → the third switching valve 100 → the radiator 30 → the first water pump 10. In the second loop, the flow path of the coolant is: the second water pump 40 → the first three-way valve 110 (the port A2 communicates with the port C2) → the third three-way valve 170 (the port B4 communicates with the port A4) → the third switching valve 100 → the radiator 30 → the first water pump 10 → the second three-way valve 120 (the port C3 communicates with the port B3) → the battery 60 → the charger 70 / the first branch S1 → the second water pump 40. Accordingly, the coolant exchanges heat with the external environment by using the radiator 30, to reduce the temperature of the coolant, thereby cooling the motor 20 and the battery 60.

The third mode is a mode in which the radiator 30 is used to cool the motor 20, the battery 60, and the refrigerant in the air conditioning system at the same time. As shown in FIG. 5, in this mode, the first water pump 10, the motor 20, and the radiator 30 form one circulation loop. The first water pump 10, the battery 60, the charger 70, the second water pump 40, and the radiator 30 form one circulation loop. The first water pump 10, the second heat exchanger 160, and the radiator 30 form one circulation loop.

Particularly, in this case, there are three loops in the flow path of the coolant. In the first loop, the flow path of the coolant is: the first water pump 10 → the motor 20 → the third switching valve 100 → the radiator 30 → the first water pump 10. In the second loop, the flow path of the coolant is: the second water pump 40 → the first three-way valve 110 (the port A2 communicates with the port C2) → the third three-way valve 170 (the port B4 communicates with the port A4) → the third switching valve 100 → the radiator 30 → the first water pump 10 → the second three-way valve (the port C3 communicates with the port B3) → the battery 60 → the charger 70 / the first branch S1 → the second water pump 40. In the third loop, the flow path of the coolant is: the first water pump 10 → the fourth three-way valve 180 (the port C5 communicates with the port B5) → the second heat exchanger 160 → the third three-way valve 170 (the port C4 communicates with the port B4) → the third switching valve 100 → the radiator 30 → the first water pump 10. Accordingly, the coolant exchanges heat with the external environment by using the radiator 30, to reduce the temperature of the coolant, thereby cooling the motor 20, the battery 60, and the refrigerant in the air conditioning system.

The fourth mode is a mode in which the radiator 30 is used to cool the motor 20 and the refrigerant in the air conditioning system at the same time, and the first heat exchanger 50 is used to cool the battery 60. As shown in FIG. 6, in this mode, the first water pump 10, the motor 20, and the radiator 30 form one circulation loop. The first water pump 10, the second heat exchanger 160, and the radiator 30 form one circulation loop. The second coolant loop L2 operates.

Particularly, in this case, there are three loops in the flow path of the coolant. In the first loop, the flow path of the coolant is: the first water pump 10 → the motor 20 → the third switching valve 100 → the radiator 30 → the first water pump 10. In the second loop, the flow path of the coolant is: the first water pump 10 → the fourth three-way valve 180 (the port C5 communicates with the port B5) → the second heat exchanger 160 → the third three-way valve 170 (the port C4 communicates with the port B4) → the third switching valve 100 → the radiator 30 → the first water pump 10. Accordingly, the coolant exchanges heat with the external environment by using the radiator 30, to reduce the temperature of the coolant, thereby cooling the motor 20 and the refrigerant in the air conditioning system. In the third loop, the flow path of the coolant is: the second water pump 40 → the first three-way valve 110 (the port A2 communicates with the port B2) → the first heat exchanger 50 → the second switching valve 90 (the port B1 communicates with the port C1) → the second three-way valve 120 (the port A3 communicates with the port B3) → the battery 60 → the charger 70/the first branch S1 - the second water pump 40. In this case, the first heat exchanger 50 exchanges heat with the refrigerant in the vehicle air conditioning system, to realize the cooling of the battery 60. At the same time, the waste heat of the battery 60 and the charger 70 recovered in the air conditioning system may be used to increase the enthalpy of the air conditioning system, and to improve the capacity of the air conditioning system.

The fifth mode is a mode in which the radiator 30 is used to cool the motor 20, the heater 140 and the air conditioning system are used to heat the cabin, and the battery 60 maintains a constant temperature. As shown in FIG. 7, in this mode, the first water pump 10, the motor 20, and the radiator 30 form one circulation loop. The second coolant loop L2 operates. The third water pump 130, the heater 140, the heater core 150, and the second heat exchanger 160 form one circulation loop.

Particularly, in this case, there are three loops in the flow path of the coolant. In the first loop, the flow path of the coolant is: the first water pump 10 → the motor 20 → the third switching valve 100 → the radiator 30 → the first water pump 10. Accordingly, the coolant exchanges heat with the external environment by using the radiator 30, to reduce the temperature of the coolant, thereby cooling the motor 20. In the second loop, the flow path of the coolant is: the second water pump 40 → the first three-way valve 110 (the port A2 communicates with the port B2) → the first heat exchanger 50 → the second switching valve 90 (the port B1 communicates with and the port C1) → the second three-way valve 120 (the port A3 communicates with and the port B3) → the battery 60 → the charger 70/the first branch S1 → the second water pump 40. In this case, the first heat exchanger 50 does not exchange heat with the vehicle air conditioning system, to maintain the battery 60 to be in the constant-temperature mode to the largest extent. In the third loop, the flow path of the coolant is: the third water pump 130 → the heater 140 → the heater core 150 → the fourth switching valve 190 → the fourth three-way valve 180 (the port A5 communicates with and the port B5) → the second heat exchanger 160 → the third water pump 130. Accordingly, the heat of the heater 140 may be transferred to the cabin by using the heater core 150, and the heat of the air conditioning system may be transferred to the cabin via the second heat exchanger 160 and by using the heater core 150, to heat the cabin. The heater 140 may operate as an auxiliary heating source, and the air conditioning system may operate as the primary heating source.

The sixth mode is a mode in which the radiator 30 is used to cool the motor 20, the heater 140 and the air conditioning system are used to heat the cabin, and the first heat exchanger 50 is used to recover the waste heat of the battery 60. As shown in FIG. 8, in this mode, the first water pump 10, the motor 20, and the radiator 30 form one circulation loop. The second coolant loop L2 operates. The third water pump 130, the heater 140, the heater core 150, and the second heat exchanger 160 form one circulation loop.

Particularly, in this case, there are three loops in the flow path of the coolant. In the first loop, the flow path of the coolant is: the first water pump 10 → the motor 20 → the third switching valve 100 → the radiator 30 → the first water pump 10. Accordingly, the coolant exchanges heat with the external environment by using the radiator 30, to reduce the temperature of the coolant, thereby cooling the motor 20. In the second loop, the flow path of the coolant is: the second water pump 40 → the first three-way valve 110 (the port A2 communicates with the port B2) → the first heat exchanger 50 → the second switching valve 90 (the port B1 communicates with the port C1) → the second three-way valve 120 (the port A3 communicates with the port B3) → the battery 60 → the charger 70/the first branch S1 → the second water pump 40. In this case, the first heat exchanger 50 exchanges heat with the vehicle air conditioning system, and recovers the waste heat of the battery 60 and the charger 70, to be used to increase the enthalpy of the air conditioning system, to improve the capacity of the air conditioning system. At the same time, that cools the battery 60. In the third loop, the flow path of the coolant is: the third water pump 130 → the heater 140 → the heater core 150 → the fourth switching valve 190 → the fourth three-way valve 180 (the port A5 communicates with the port B5) → the second heat exchanger 160 → the third water pump 130. Accordingly, the heat of the heater 140 may be transferred to the cabin by using the heater core 150, and the heat of the air conditioning system may be transferred to the cabin via the second heat exchanger 160 and by using the heater core 150, to heat the cabin. The heater 140 may operate as an auxiliary heating source, and the air conditioning system may operate as the primary heating source.

The seventh mode is a mode in which the radiator 30 is used to cool the motor 20 and the battery 60 at the same time, and the heater 140 and the air conditioning system are used to heat the cabin. As shown in FIG. 9, in this mode, the first water pump 10, the motor 20, and the radiator 30 form one circulation loop. The first water pump 10, the battery 60, the charger 70, the second water pump 40, and the radiator 30 form one circulation loop. The third water pump 130, the heater 140, the heater core 150, and the second heat exchanger 160 form one circulation loop.

Particularly, in this case, there are three loops in the flow path of the coolant. In the first loop, the flow path of the coolant is: the first water pump 10 → the motor 20 → the third switching valve 100 → the radiator 30 → the first water pump 10. In the second loop, the flow path of the coolant is: the second water pump 40 → the first three-way valve 110 (the port A2 communicates with the port C2) → the third three-way valve 170 (the port B4 communicates with the port A4) → the third switching valve 100 → the radiator 30 → the first water pump 10 → the second three-way valve 120 (the port C3 communicates with the port B3) → the battery 60 → the charger 70/the first branch S1 → the second water pump 40. Accordingly, the coolant exchanges heat with the external environment by using the radiator 30, to reduce the temperature of the coolant, thereby cooling the motor 20 and the battery 60. In the third loop, the flow path of the coolant is: the third water pump 130 → the heater 140 → the heater core 150 → the fourth switching valve 190 → the fourth three-way valve 180 (the port A5 communicates with the port B5) → the second heat exchanger 160 → the third water pump 130. Accordingly, the heat of the heater 140 may be transferred to the cabin by using the heater core 150, and the heat of the air conditioning system may be transferred to the cabin via the second heat exchanger 160 and by using the heater core 150, to heat the cabin. The heater 140 may operate as an auxiliary heating source, and the air conditioning system may operate as the primary heating source.

The eighth mode is a mode in which the heater 140 and the air conditioning system are used to heat the cabin, and the waste heat of the motor is recovered. As shown in FIG. 10, in this mode, the third water pump 130, the heater 140, the heater core 150, and the second heat exchanger 160 form one circulation loop. The first water pump 10, the first heat exchanger 50, and the motor 20 form one circulation loop.

Particularly, in this case, there are two loops in the flow path of the coolant. In the first loop, the flow path of the coolant is: the third water pump 130 → the heater 140 → the heater core 150 → the fourth switching valve 190 → the fourth three-way valve 180 (the port A5 communicates with the port B5) → the second heat exchanger 160 → the third water pump 130. Accordingly, the heat of the heater 140 may be transferred to the cabin by using the heater core 150, and the heat of the air conditioning system may be transferred to the cabin via the second heat exchanger 160 and by using the heater core 150, to heat the cabin. The heater 140 may operate as an auxiliary heating source, and the air conditioning system may operate as the primary heating source. In the second loop, the flow path of the coolant is: the first water pump 10 → the motor 20 → the first switching valve 80 → the first heat exchanger 150 → the second switching valve 90 (the port B1 communicates with the port A1) → the first water pump 10. Accordingly, the waste heat of the motor 20 may be recovered into the air conditioning system by using the first heat exchanger 50, to be used to increase the enthalpy of the air conditioning system, and to improve the capacity of the air conditioning system.

The ninth mode is a mode in which the heater 140 and the air conditioning system are used to heat the cabin, and the first heat exchanger 50 is used to recover the waste heat of the motor 20 and cool the battery 60. As shown in FIG. 11, in this mode, the third water pump 130, the heater 140, the heater core 150, and the second heat exchanger 160 form one circulation loop. The first water pump 10, the first heat exchanger 50, and the motor 20 form one circulation loop. The second water pump 40, the first heat exchanger 50, the first water pump 10, the battery 60, and the charger 70 form one cooling circuit.

Particularly, in this case, there are three loops in the flow path of the coolant. In the first loop, the flow path of the coolant is: the third water pump 130 → the heater 140 → the heater core 150 → the fourth switching valve 190 → the fourth three-way valve 180 (the port A5 communicates with the port B5) → the second heat exchanger 160 → the third water pump 130. Accordingly, the heat of the heater 140 may be transferred to the cabin by using the heater core 150, and the heat of the air conditioning system may be transferred to the cabin via the second heat exchanger 160 and by using the heater core 150, to heat the cabin. The heater 140 may operate as an auxiliary heating source, and the air conditioning system may operate as the primary heating source. In the second loop, the flow path of the coolant is: the first water pump 10 → the motor 20 → the first switching valve 80 → the first heat exchanger 50 → the second switching valve 90 (the port B1 communicates with the port A1) → the first water pump 10. Accordingly, the waste heat of the motor 20 may be recovered into the air conditioning system by using the first heat exchanger 50, to be used to increase the enthalpy of the air conditioning system, and to improve the capacity of the air conditioning system. In the third loop, the flow path of the coolant is: the second water pump 40 → the first three-way valve 110 (the port A2 communicates with the port B2) → the first heat exchanger 50 → the second switching valve 90 (the port B1 communicates with the port A1) → the first water pump 10 → the second three-way valve 120 (the port C3 communicates with the port B3) → the battery 60 → the charger 70/the first branch S1 → the second water pump 40. In this case, the first heat exchanger 50 exchanges heat with the vehicle air conditioning system, to reduce the temperature of the coolant in the second coolant loop L2, thereby cooling the battery 60. At the same time, the first heat exchanger 50 supplies the heat of the battery 60 to the air conditioning system, to be used to increase the enthalpy of the air conditioning system, and to improve the capacity of the air conditioning system.

The tenth mode is a mode in which the radiator 30 is used to cool the motor 20, and the heater 140, and the air conditioning system are used to heat the cabin, and the battery 60. As shown in FIG. 12, in this mode, the first water pump 10, the motor 20, and the radiator 30 form one circulation loop. The third water pump 130, the heater 140, the heater core 150, and the second heat exchanger 160 form one circulation loop. The second water pump 40, the third water pump 130, the heater 140, the heater core 150, and the battery 60 form one cooling circuit.

Particularly, in this case, there are three loops in the flow path of the coolant. In the first loop, the flow path of the coolant is: the first water pump 10 → the motor 20 → the third switching valve 100 → the radiator 30 → the first water pump 10. Accordingly, for example, the radiator 30 exchanges heat with the external environment, to reduce the temperature of the coolant, thereby cooling the motor 20. In the second loop, the flow path of the coolant is: the third water pump 130 → the heater 140 → the heater core 150 → the fourth switching valve 190 → the fourth three-way valve 180 (the port A5 communicates with the port B5) → the second heat exchanger 160 → the third water pump 130. Accordingly, the heat of the heater 140 may be transferred to the cabin by using the heater core 150, and the heat of the air conditioning system may be transferred to the cabin via the second heat exchanger 160 and by using the heater core 150, to heat the cabin. The heater 140 may operate as an auxiliary heating source, and the air conditioning system may operate as the primary heating source. In the third loop, the second water pump 40 → the first three-way valve 110 (the port A2 communicates with the port C2) → the third three-way valve 170 (the port A4 communicates with the port C4) → the third water pump 130 → the heater 140 → the heater core 150 → the fourth switching valve 190 → the fourth three-way valve 180 (the port A5 communicates with the port C5) → the second three-way valve (the port C3 communicates with the port B3) → the battery 60 → the charger 70/the first branch S1 → the second water pump 40. In this case, the heater 140 and the air conditioning system are used to heat the battery 60.

The eleventh mode is a mode in which the first heat exchanger 50 is used to recover the waste heat of the motor 20, and the heater 140 and the air conditioning system are used to heat the cabin and the battery 60. As shown in FIG. 13, the first water pump 10, the first heat exchanger 50, and the motor 20 form one circulation loop. The third water pump 130, the heater 140, the heater core 150, and the second heat exchanger 160 form one circulation loop. The second water pump 40, the third water pump 130, the heater 140, the heater core 150, and the battery 60 form one cooling circuit.

Particularly, in this case, there are three loops in the flow path of the coolant. In the first loop, the flow path of the coolant is: the first water pump 10 → the motor 20 → the first switching valve 80 → the first heat exchanger 150 → the second switching valve 90 (the port B1 communicates with the port A1) → the first water pump 10. Accordingly, the waste heat of the motor 20 may be recovered into the air conditioning system by using the first heat exchanger 50, to be used to increase the enthalpy of the air conditioning system, and to improve the capacity of the air conditioning system. In the second loop, the flow path of the coolant is: the third water pump 130 → the heater 140 → the heater core 150 → the fourth switching valve 190 → the fourth three-way valve 180 (the port A5 communicates with the port B5) → the second heat exchanger 160 → the third water pump 130. Accordingly, the heat of the heater 140 may be transferred to the cabin by using the heater core 150, and the heat of the air conditioning system may be transferred to the cabin via the second heat exchanger 160 and by using the heater core 150, to heat the cabin. The heater 140 operates as an auxiliary heating source, and the air conditioning system operates as the primary heating source. In the third loop, the second water pump 40 → the first three-way valve 110 (the port A2 communicates with the port C2) → the third three-way valve 170 (the port A4 communicates with the port C4) → the third water pump 130 → the heater 140 → the heater core 150 → the fourth switching valve 190 → the fourth three-way valve 180 (the port A5 communicates with and the port C5) → the second three-way valve (the port C3 communicates with the port B3) → the battery 60 → the charger 70/the first branch S1 → the second water pump 40. In this case, the heater 140 and the air conditioning system are used to heat the battery 60.

The twelfth mode is a mode in which the radiator 30 is used to cool the motor 20, the first heat exchanger 50 is used to recover the waste heat of the motor 20, and the heater 140 and the air conditioning system are used to heat the cabin and the battery 60. As shown in FIG. 14, in this mode, the first water pump 10, the motor 20 and the radiator 30 form one circulation loop. The first water pump 10, the first heat exchanger 50 and the motor 20 form one circulation loop. The third water pump 130, the heater 140, the heater core 150, and the second heat exchanger 160 form one circulation loop. The second water pump 40, the third water pump 130, the heater 140, the heater core 150, and the battery 60 form one cooling circuit.

Particularly, in this case, there are four loops in the flow path of the coolant. In the first loop, the flow path of the coolant is: the first water pump 10 → the motor 20 → the third switching valve 100 → the radiator 30 → the first water pump 10. Accordingly, for example, the radiator 30 exchanges heat with the external environment, to reduce the temperature of the coolant, thereby cooling the motor 20. In the second loop, the flow path of the coolant is: the first water pump 10 → the motor 20 → the first switching valve 80 → the first heat exchanger 150 → the second switching valve 90 (the port B1 communicates with the port A1) → the first water pump 10. Accordingly, the waste heat of the motor 20 may be recovered into the air conditioning system by using the first heat exchanger 50, to be used to increase the enthalpy of the air conditioning system, and to improve the capacity of the air conditioning system. In the third loop, the flow path of the coolant is: the third water pump 130 → the heater 140 → the heater core 150 → the fourth switching valve 190 → the fourth three-way valve 180 (the port A5 communicates with the port B5) → the second heat exchanger 160 → the third water pump 130. Accordingly, the heat of the heater 140 may be transferred to the cabin by using the heater core 150, and the heat of the air conditioning system may be transferred to the cabin via the second heat exchanger 160 and by using the heater core 150, to heat the cabin. The heater 140 operates as an auxiliary heating source, and the air conditioning system operates as the primary heating source. In the fourth loop, the second water pump 40 → the first three-way valve 110 (the port A2 communicates with the port C2) → the third three-way valve 170 (the port A4 communicates with the port C4) → the third water pump 130 → the heater 140 → the heater core 150 → the fourth switching valve 190 → the fourth three-way valve 180 (the port A5 communicates with the port C5) → the second three-way valve (the port C3 communicates with and the port B3) → the battery 60 → the charger 70/the first branch S1 → the second water pump 40. In this case, the heater 140 and the air conditioning system are used to heat the battery 60.

According to another aspect of the present invention, there is provided a vehicle, wherein the vehicle comprises the vehicle thermal management system stated above.

The preferable embodiments of the present invention have been described in detail above with reference to the drawings. However, the present invention is not limited to the particular details of the above embodiments but is limited only by the scope of the appended claims.

In addition, it should be noted that the particular technical features described in the particular embodiments, subject to no contradiction, may be combined in any feasible way. In order to avoid unnecessary repeating, the feasible modes of combination will not be described further herein.

## Claims

1. A vehicle thermal management system, comprising:
a first coolant loop (L1), wherein a first water pump (10), a motor (20), and a radiator (30) are provided in the first coolant loop (L1);
a second coolant loop (L2), wherein a second water pump (40), a battery (60), and a first heat exchanger (50) are provided in the second coolant loop (L2), and the first heat exchanger (50) is further located in a refrigerant flow path of an air conditioning system of a vehicle; and
a first flow path (F1) and a second flow path (F2), wherein one end of the first flow path (F1) is connected to a coolant outlet of the motor (20), and the other end is connected to a coolant inlet of the first heat exchanger (50), and one end of the second flow path (F2) is connected to a coolant outlet of the first heat exchanger (50) and the other end is connected to a coolant inlet of the first water pump (10), whereby, in a motor-waste-heat-recovery mode, the vehicle thermal management system is capable of heating a refrigerant in the refrigerant flow path by using heat of the motor (20);
wherein a first switching valve (80) is provided between the coolant outlet of the motor (20) and the coolant inlet of the first heat exchanger (50), and a second switching valve (90) is provided between the coolant outlet of the first heat exchanger (50) and the coolant inlet of the first water pump (10), whereby, in the motor-waste-heat-recovery mode, the vehicle thermal management system is capable of providing a flow path of a coolant: the first water pump (10) → the motor (20) → the first switching valve (80) → the first heat exchanger (50) → the second switching valve (90) → the first water pump (10);
**characterized in that** the vehicle thermal management system further comprises a first three-way valve (110), a second three-way valve (120), a third flow path (F3) and a fourth flow path (F4);
both of the first three-way valve (110) and the second three-way valve (120) are provided in the second coolant loop (L2) and are located at a coolant inlet side and a coolant outlet side of the first heat exchanger (50), respectively, one remaining port of the first three-way valve (110) is connected to the first coolant loop (L1) via the third flow path (F3), and one remaining port of the second three-way valve (120) is connected to the first coolant loop (L1) via the fourth flow path (F4); and
a connection point of the fourth flow path (F4) and the first coolant loop (L1) and a connection point of the third flow path (F3) and the first coolant loop (L1) are located on a coolant inlet side and a coolant outlet side of the motor (20), respectively, whereby the vehicle thermal management system is capable of heating the battery (60) by using heat of the motor (20), or cooling the battery (60) by using the radiator (30).

2. The vehicle thermal management system according to claim 1, **characterized in that**, the first switching valve (80) is provided in the first flow path (F1); and
the second flow path (F2) is bypass connected to the second coolant loop (L2) via the second switching valve (90), and the second switching valve (90) is a three-way valve, whereby the second switching valve (90) is capable of realizing an on-off switch of the second flow path (F2) and an on-off switch of the second coolant loop (L2).

3. The vehicle thermal management system according to claim 1, **characterized in that**, a third switching valve (100) is provided in the first coolant loop (L1), and the third switching valve (100) is provided between the motor (20) and the radiator (30), to realize an on-off switch of the first coolant loop (L1).

4. The vehicle thermal management system according to claim 1, **characterized in that**, in the second coolant loop (L2), a first branch (S1) and a second branch (S2) are connected in parallel between the battery (60) and the second water pump (40);
the first branch (S1) is short-circuit connected between the battery (60) and the second water pump (40); and
an electronic device is provided in the second branch (S2), wherein the electronic device comprises at least one of a charger (70), a motor controller, and a DC-DC converter.

5. The vehicle thermal management system according to claim 4, **characterized in that**, a flow size of the second branch (S2) is less than a flow size of the first branch (S1), whereby a flow rate of a coolant flowing through the second branch (S2) is capable of being less than a flow rate of a coolant flowing through the first branch (S1).

6. The vehicle thermal management system according to claim 1-5, **characterized in that**, the vehicle thermal management system further comprises a third coolant loop (L3), a third water pump (130), a heater (140), and an heater core (150) are provided in the third coolant loop (L3), the heater core (150) is for heating a cabin of the vehicle by using the heater (140), and the third coolant loop (L3) is connected to the first coolant loop (L1) and the second coolant loop (L2) by flow paths, whereby the third coolant loop (L3) is capable of solely operating, or being connected to one of the first coolant loop (L1) and the second coolant loop (L2) to operate, or being connected to both of the first coolant loop (L1) and the second coolant loop (L2) to operate.

7. The vehicle thermal management system according to claim 6, **characterized in that**, a second heat exchanger (160) is provided in the third coolant loop (L3), and the second heat exchanger (160) is further located in the refrigerant flow path of the air conditioning system.

8. The vehicle thermal management system according to claim 7, **characterized in that**, the second heat exchanger (160) is configured as a condenser in the air conditioning system.

9. The vehicle thermal management system according to claim 7, **characterized in that**, the vehicle thermal management system further comprises a third three-way valve (170) and a fourth three-way valve (180);
the third three-way valve (170) is provided in the third flow path (F3), and one remaining port of the third three-way valve (170) is connected to the third coolant loop (L3) by a flow path;
the fourth three-way valve (180) is provided in the third coolant loop (L3), and one remaining port of the fourth three-way valve (180) is connected to the fourth flow path (F4) by a flow path; and
a connection point of the fourth three-way valve (180) and the third coolant loop (L3) and a connection point of the third three-way valve (170) and the third coolant loop (L3) are located on a coolant inlet side and a coolant outlet side of the second heat exchanger (160), respectively.

10. The vehicle thermal management system according to claim 9, **characterized in that**, a fourth switching valve (190) is provided in the third coolant loop (L3), and the fourth switching valve (190) is located between the heater core (150) and the fourth three-way valve (180), to realize an on-off switch of the third coolant loop (L3).

11. A vehicle, **characterized in that**, the vehicle comprises the vehicle thermal management system according to any one of claims 1-10.

## Patentansprüche

1. Fahrzeug-Wärmemanagementsystem, aufweisend:
einen ersten Kühlmittelkreislauf (L1), wobei in dem ersten Kühlmittelkreislauf (L1) eine erste Wasserpumpe (10), ein Motor (20) und ein Kühler (30) bereitgestellt sind;
einen zweiten Kühlmittelkreislauf (L2), wobei eine zweite Wasserpumpe (40), eine Batterie (60) und eine erste Wärmetauschvorrichtung (50) in dem zweiten Kühlmittelkreislauf (L2) bereitgestellt sind, und sich die erste Wärmetauschvorrichtung (50) ferner in einem Kältemittel-Strömungspfad eines Klimatisierungssystems eines Fahrzeugs befindet; und
einen ersten Strömungspfad (F1) und einen zweiten Strömungspfad (F2), wobei ein Ende des ersten Strömungspfads (F1) mit einem Kühlmittelauslass des Motors (20) verbunden ist, und das andere Ende mit einem Kühlmitteleinlass der ersten Wärmetauschvorrichtung (50) verbunden ist, und ein Ende des zweiten Strömungspfads (F2) mit einem Kühlmittelauslass der ersten Wärmetauschvorrichtung (50) verbunden ist und das andere Ende mit einem Kühlmitteleinlass der ersten Wasserpumpe (10) verbunden ist, wodurch, in einem Motor-Abwärme-Rückgewinnung-Modus, das Fahrzeug-Wärmemanagementsystem in der Lage dazu ist, ein Kältemittel in dem Kältemittel-Strömungspfad unter Verwendung von Wärme des Motors (20) zu erwärmen;
wobei ein erstes Schaltventil (80) zwischen dem Kühlmittelauslass des Motors (20) und dem Kühlmitteleinlass der ersten Wärmetauschvorrichtung (50) bereitgestellt ist, und ein zweites Schaltventil (90) zwischen dem Kühlmittelauslass der ersten Wärmetauschvorrichtung (50) und dem Kühlmitteleinlass der ersten Wasserpumpe (10) bereitgestellt ist, wodurch, in dem Motor-Abwärme-Rückgewinnung-Modus, das Fahrzeug-Wärmemanagementsystem in der Lage dazu ist, einen Strömungspfad eines Kühlmittels bereitzustellen: die erste Wasserpumpe (10) -> der Motor (20) -> das erste Schaltventil (80) -> die erste Wärmetauschvorrichtung (50) -> das zweite Schaltventil (90) -> die erste Wasserpumpe (10);
**dadurch gekennzeichnet, dass** das Fahrzeug-Wärmemanagementsystem ferner ein erstes Dreiwegeventil (110), ein zweites Dreiwegeventil (120), einen dritten Strömungspfad (F3) und einen vierten Strömungspfad (F4) aufweist;
wobei sowohl das erste Dreiwegeventil (110) als auch das zweite Dreiwegeventil (120) in dem zweiten Kühlmittelkreislauf (L2) bereitgestellt ist und sich in jeweils zugeordneter Weise an einer Kühlmitteleinlassseite und einer Kühlmittelauslassseite der ersten Wärmetauschvorrichtung (50) befinden, ein verbleibender Anschluss des ersten Dreiwegeventils (110) über den dritten Strömungspfad (F3) mit dem ersten Kühlmittelkreislauf (L1) verbunden ist, und ein verbleibender Anschluss des zweiten Dreiwegeventils (120) über den vierten Strömungspfad (F4) mit dem ersten Kühlmittelkreislauf (L1) verbunden ist; und
wobei sich eine Verbindungsstelle des vierten Strömungspfads (F4) und des ersten Kühlmittelkreislaufs (L1) sowie eine Verbindungsstelle des dritten Strömungspfads (F3) und des ersten Kühlmittelkreislaufs (L1) in jeweils zugeordneter Weise an einer Kühlmitteleinlassseite und einer Kühlmittelauslassseite des Motors (20) befinden, wodurch das Fahrzeug-Wärmemanagementsystem in der Lage dazu ist, die Batterie (60) unter Verwendung von Wärme des Motors (20) zu erwärmen oder die Batterie (60) unter Verwendung des Kühlers (30) zu kühlen.

2. Fahrzeug-Wärmemanagementsystem gemäß Anspruch **1, dadurch gekennzeichnet, dass** das erste Schaltventil (80) in dem ersten Strömungspfad (F1) bereitgestellt ist; und
der zweite Strömungspfad (F2) über das zweite Schaltventil (90) mit dem zweiten Kühlmittelkreislauf (L2) bypassmäßig verbunden ist, und das zweite Schaltventil (90) ein Dreiwegeventil ist, wodurch das zweite Schaltventil (90) in der Lage dazu ist, einen Ein-Aus-Schalter des zweiten Strömungspfads (F2) und einen Ein-Aus-Schalter des zweiten Kühlmittelkreislaufs (L2) zu realisieren.

3. Fahrzeug-Wärmemanagementsystem gemäß Anspruch 1,
**dadurch gekennzeichnet, dass** ein drittes Schaltventil (100) in dem ersten Kühlmittelkreislauf (L1) bereitgestellt ist, und das dritte Schaltventil (100) zwischen dem Motor (20) und dem Kühler (30) bereitgestellt ist, um ein Ein-Aus-Schalten des ersten Kühlmittelkreislaufs (L1) zu realisieren.

4. Fahrzeug-Wärmemanagementsystem gemäß Anspruch 1, **dadurch gekennzeichnet, dass** in dem zweiten Kühlmittelkreislauf (L2) ein erster Zweig (S1) und ein zweiter Zweig (S2) zwischen der Batterie (60) und der zweiten Wasserpumpe (40) parallel verbunden sind;
der erste Zweig (S1) zwischen der Batterie (60) und der zweiten Wasserpumpe (40) kurzgeschlossen ist; und
eine elektronische Vorrichtung in dem zweiten Zweig (S2) bereitgestellt ist, wobei die elektronische Vorrichtung mindestens eines von einer Ladevorrichtung (70), einer Motorsteuerung und einem Gleichstrom-Gleichstrom-Wandler aufweist.

5. Fahrzeug-Wärmemanagementsystem gemäß Anspruch 4,
**dadurch gekennzeichnet, dass** eine Strömungsgröße des zweiten Zweigs (S2) geringer ist als eine Strömungsgröße des ersten Zweigs (S1), wodurch eine Strömungsrate eines Kühlmittels, welches durch den zweiten Zweig (S2) strömt, dazu in der Lage ist, geringer zu sein als eine Strömungsrate eines Kühlmittels, welches durch den ersten Zweig (S1) strömt.

6. Fahrzeug-Wärmemanagementsystem gemäß einem der Ansprüche 1 bis 5, **dadurch gekennzeichnet, dass** das Fahrzeug-Wärmemanagementsystem ferner einen dritten Kühlmittelkreislauf (L3) aufweist, wobei eine dritte Wasserpumpe (130), eine Heizvorrichtung (140) und ein Heizvorrichtungskern (150) in dem dritten Kühlmittelkreislauf (L3) bereitgestellt sind, wobei der Heizvorrichtungskern (150) zum Heizen eines Innenraums des Fahrzeugs unter Verwendung der Heizvorrichtung (140) dient, und der dritte Kühlmittelkreislauf (L3) mit dem ersten Kühlmittelkreislauf (L1) und dem zweiten Kühlmittelkreislauf (L2) durch Strömungspfade verbunden ist, wodurch der dritte Kühlmittelkreislauf (L3) in der Lage dazu ist, allein in Betrieb zu sein, oder mit einem von dem ersten Kühlmittelkreislauf (L1) und dem zweiten Kühlmittelkreislauf (L2) verbunden zu sein, um in Betrieb zu sein, oder mit sowohl dem ersten Kühlmittelkreislauf (L1) als auch dem zweiten Kühlmittelkreislauf (L2) verbunden zu sein, um in Betrieb zu sein.

7. Fahrzeug-Wärmemanagementsystem gemäß Anspruch **6, dadurch gekennzeichnet, dass** eine zweite Wärmetauschvorrichtung (160) in dem dritten Kühlmittelkreislauf (L3) bereitgestellt ist, und sich die zweite Wärmetauschvorrichtung (160) ferner in dem Kältemittel-Strömungspfad des Klimatisierungssystems befindet.

8. Fahrzeug-Wärmemanagementsystem gemäß Anspruch 7,
**dadurch gekennzeichnet, dass** die zweite Wärmetauschvorrichtung (160) als eine Kondensationsvorrichtung in dem Klimatisierungssystem konfiguriert ist.

9. Fahrzeug-Wärmemanagementsystem gemäß Anspruch 7, **dadurch gekennzeichnet, dass** das Fahrzeug-Wärmemanagementsystem ferner ein drittes Dreiwegeventil (170) und ein viertes Dreiwegeventil (180) aufweist;
das dritte Dreiwegeventil (170) in dem dritten Strömungspfad (F3) bereitgestellt ist, und ein verbleibender Anschluss des dritten Dreiwegeventils (170) über einen Strömungspfad mit dem dritten Kühlmittelkreislauf (L3) verbunden ist;
das vierte Dreiwegeventil (180) in dem dritten Kühlmittelkreislauf (L3) bereitgestellt ist, und ein verbleibender Anschluss des vierten Dreiwegeventils (180) durch einen Verbindungspfad mit dem vierten Strömungspfad (F4) verbunden ist; und
sich eine Verbindungsstelle des vierten Dreiwegeventils (180) und des dritten Kühlmittelkreislaufs (L3) sowie eine Verbindungsstelle des dritten Dreiwegeventils (170) und des dritten Kühlmittelkreislaufs (L3) in jeweils zugeordneter Weise an einer Kühlmitteleinlassseite und einer Kühlmittelauslassseite der zweiten Wärmetauschvorrichtung (160) befinden.

10. Fahrzeug-Wärmemanagementsystem gemäß Anspruch 9, **dadurch gekennzeichnet, dass** ein viertes Schaltventil (190) in dem dritten Kühlmittelkreislauf (L3) bereitgestellt ist, und sich das vierte Schaltventil (190) zwischen dem Heizvorrichtungskern (150) und dem vierten Dreiwegeventil (180) befindet, um einen Ein-Aus-Schalter des dritten Kühlmittelkreislaufs (L3) zu realisieren.

11. Fahrzeug, **dadurch gekennzeichnet, dass** das Fahrzeug das Fahrzeug-Wärmemanagementsystem gemäß einem der Ansprüche 1 bis 10 aufweist.

## Revendications

1. Système de gestion thermique de véhicule,
comprenant :
une première boucle de liquide de refroidissement (L1), où une première pompe à eau (10), un moteur (20) et un radiateur (30) sont prévus dans la première boucle de liquide de refroidissement (L1) ;
une deuxième boucle de liquide de refroidissement (L2), où une deuxième pompe à eau (40), une batterie (60) et un premier échangeur de chaleur (50) sont prévus dans la deuxième boucle de liquide de refroidissement (L2), et le premier échangeur de chaleur (50) est en outre situé dans un trajet d'écoulement de réfrigérant d'un système de climatisation d'un véhicule ; et
un premier trajet d'écoulement (F1) et un deuxième trajet d'écoulement (F2), dans lequel une extrémité du premier trajet d'écoulement (F1) est connectée à une sortie de liquide de refroidissement du moteur (20), et l'autre extrémité est connectée à une entrée de liquide de refroidissement du premier échangeur de chaleur (50), et une extrémité du deuxième trajet d'écoulement (F2) est connectée à une sortie de liquide de refroidissement du premier échangeur de chaleur (50) et l'autre extrémité est connectée à une entrée de liquide de refroidissement de la première pompe à eau (10), moyennant quoi, dans un mode de récupération de chaleur perdue du moteur, le système de gestion thermique de véhicule est capable de chauffer un réfrigérant dans le trajet d'écoulement de réfrigérant en utilisant la chaleur du moteur (20) ;
dans lequel une première vanne de commutation (80) est prévue entre la sortie de liquide de refroidissement du moteur (20) et l'entrée de liquide de refroidissement du premier échangeur de chaleur (50), et une deuxième vanne de commutation (90) est prévue entre la sortie de liquide de refroidissement du premier échangeur de chaleur (50) et l'entrée de liquide de refroidissement de la première pompe à eau (10), moyennant quoi, dans le mode de récupération de chaleur perdue du moteur, le système de gestion thermique de véhicule est capable de fournir un trajet d'écoulement d'un liquide de refroidissement : la première pompe à eau (10) -> le moteur (20) -> la première vanne de commutation (80) -> le premier échangeur de chaleur (50) -> la deuxième vanne de commutation (90) -> la première pompe à eau (10) ;
**caractérisé en ce que** le système de gestion thermique de véhicule comprend en outre une première vanne à trois voies (110), une deuxième vanne à trois voies (120), un troisième trajet d'écoulement (F3) et un quatrième trajet d'écoulement (F4) ;
la première vanne à trois voies (110) ainsi que la deuxième vanne à trois voies (120) sont toutes les deux prévues dans la deuxième boucle de liquide de refroidissement (L2) et sont situées respectivement sur un côté entrée de liquide de refroidissement et un côté sortie de liquide de refroidissement du premier échangeur de chaleur (50), un orifice restant de la première vanne à trois voies (110) est connecté à la première boucle de liquide de refroidissement (L1) via le troisième trajet d'écoulement (F3), et un orifice restant de la deuxième vanne à trois voies (120) est connecté à la première boucle de liquide de refroidissement (L1) via le quatrième trajet d'écoulement (F4) ; et
un point de connexion du quatrième trajet d'écoulement (F4) et de la première boucle de liquide de refroidissement (L1) et un point de connexion du troisième trajet d'écoulement (F3) et de la première boucle de liquide de refroidissement (L1) sont situés respectivement sur un côté entrée de liquide de refroidissement et un côté sortie de liquide de refroidissement du moteur (20), moyennant quoi le système de gestion thermique de véhicule est capable de chauffer la batterie (60) en utilisant la chaleur du moteur (20), ou de refroidir la batterie (60) en utilisant le radiateur (30).

2. Système de gestion thermique de véhicule selon la revendication 1, **caractérisé en ce que** la première vanne de commutation (80) est prévue dans le premier trajet d'écoulement (F1) ; et
le deuxième trajet d'écoulement (F2) est raccordé en dérivation à la deuxième boucle de liquide de refroidissement (L2) par l'intermédiaire de la deuxième vanne de commutation (90), et la deuxième vanne de commutation (90) est une vanne à trois voies, moyennant quoi la deuxième vanne de commutation (90) est capable de réaliser une commutation marche-arrêt du deuxième trajet d'écoulement (F2) et une commutation marche-arrêt de la deuxième boucle de liquide de refroidissement (L2).

3. Système de gestion thermique de véhicule selon la revendication 1, **caractérisé en ce qu'**une troisième vanne de commutation (100) est prévue dans la première boucle de liquide de refroidissement (L1), et la troisième vanne de commutation (100) est prévue entre le moteur (20) et le radiateur (30), pour réaliser une commutation marche-arrêt de la première boucle de liquide de refroidissement (L1).

4. Système de gestion thermique de véhicule selon la revendication 1, **caractérisé en ce que**, dans la deuxième boucle de liquide de refroidissement (L2), une première branche (S1) et une deuxième branche (S2) sont connectées en parallèle entre la batterie (60) et la deuxième pompe à eau (40) ;
la première branche (S1) est connectée en court-circuit entre la batterie (60) et la deuxième pompe à eau (40) ; et
un dispositif électronique est prévu dans la deuxième branche (S2), dans lequel le dispositif électronique comprend au moins un parmi un chargeur (70), un contrôleur de moteur et un convertisseur CC-CC.

5. Système de gestion thermique de véhicule selon la revendication 4, **caractérisé en ce qu'**une taille de débit de la deuxième branche (S2) est inférieure à une taille de débit de la première branche (S1), moyennant quoi un débit d'un liquide de refroidissement s'écoulant à travers la deuxième branche (S2) peut être inférieur à un débit d'un liquide de refroidissement s'écoulant à travers la première branche (S1).

6. Système de gestion thermique de véhicule selon la revendication 1-5, **caractérisé en ce que** le système de gestion thermique de véhicule comprend en outre une troisième boucle de liquide de refroidissement (L3), où une troisième pompe à eau (130), un dispositif de chauffage (140) et un cœur de dispositif de chauffage (150) sont prévus dans la troisième boucle de liquide de refroidissement (L3), le cœur de dispositif de chauffage (150) sert à chauffer un habitacle du véhicule en utilisant le dispositif de chauffage (140), et la troisième boucle de liquide de refroidissement (L3) est connectée à la première boucle de liquide de refroidissement (L1) et à la deuxième boucle de liquide de refroidissement (L2) par des trajets d'écoulement, moyennant quoi la troisième boucle de liquide de refroidissement (L3) peut fonctionner seule, ou étant connectée à l'une de la première boucle de liquide de refroidissement (L1) et de la deuxième boucle de liquide de refroidissement (L2) pour fonctionner, ou étant connectée à la fois à la première boucle de liquide de refroidissement (L1) et à la deuxième boucle de liquide de refroidissement (L2) pour fonctionner.

7. Système de gestion thermique de véhicule selon la revendication 6, **caractérisé en ce qu'**un deuxième échangeur de chaleur (160) est prévu dans la troisième boucle de liquide de refroidissement (L3), et le deuxième échangeur de chaleur (160) est en outre situé dans le trajet d'écoulement de réfrigérant du système de climatisation.

8. Système de gestion thermique de véhicule selon la revendication 7, **caractérisé en ce que** le deuxième échangeur de chaleur (160) est configuré comme un condenseur dans le système de climatisation.

9. Système de gestion thermique de véhicule selon la revendication 7, **caractérisé en ce que** le système de gestion thermique de véhicule comprend en outre une troisième vanne à trois voies (170) et une quatrième vanne à trois voies (180) ;
la troisième vanne à trois voies (170) est prévue dans le troisième trajet d'écoulement (F3), et un orifice restant de la troisième vanne à trois voies (170) est connecté à la troisième boucle de liquide de refroidissement (L3) par un trajet d'écoulement ;
la quatrième vanne à trois voies (180) est prévue dans la troisième boucle de liquide de refroidissement (L3), et un orifice restant de la quatrième vanne à trois voies (180) est connecté au quatrième trajet d'écoulement (F4) par un trajet d'écoulement ; et
un point de connexion de la quatrième vanne à trois voies (180) et de la troisième boucle de liquide de refroidissement (L3) et un point de connexion de la troisième vanne à trois voies (170) et de la troisième boucle de liquide de refroidissement (L3) sont situés respectivement sur un côté entrée de liquide de refroidissement et un côté sortie de liquide de refroidissement du deuxième échangeur de chaleur (160).

10. Système de gestion thermique de véhicule selon la revendication 9, **caractérisé en ce qu'**une quatrième vanne de commutation (190) est prévue dans la troisième boucle de liquide de refroidissement (L3), et la quatrième vanne de commutation (190) est située entre le cœur de dispositif de chauffage (150) et la quatrième vanne à trois voies (180), pour réaliser une commutation marche-arrêt de la troisième boucle de liquide de refroidissement (L3).

11. Véhicule, **caractérisé en ce que** le véhicule comprend le système de gestion thermique de véhicule selon l'une quelconque des revendications 1 à 10.
